# EUROPÄISCHE PATENTSCHRIFT

(11) **EP 1 317 373 B1**
(45) Veröffentlichungstag und Bekanntmachung des Hinweises auf die Patenterteilung: **01.02.2006**
(21) Anmeldenummer: 01915368.3
(22) Anmeldetag: 16.03.2001
(51) Int. Cl.: B62D 35/00, B62D 35/02

(54) **KRAFTFAHRZEUG MIT UNTERBODEN**
MOTOR VEHICLE WITH AN UNDER BODY
VEHICULE DOTE D'UN DESSOUS DE CAISSE

(30) Priorität: 15.09.2000 DE 10045640
(43) Veröffentlichungstag der Anmeldung: 11.06.2003
(73) Patentinhaber: AUDI AG, 85045 Ingolstadt (DE)
(72) Erfinder: STEINICKE, Hartmut, 85051 Ingolstadt (DE); SPONER, Helmut, 85080 Gaimersheim (DE); ANGEL, Martin, 85092 Kösching (DE)
(74) Vertreter: Engelhardt, Harald
(86) Internationale Anmeldenummer: PCT/EP2001/003057
(87) Internationale Veröffentlichungsnummer: WO 2002/022432

(56) Entgegenhaltungen:
- DE-A- 3 712 048
- FR-A- 2 575 126
- US-A- 5 511 847

## Beschreibung

Die Erfindung betrifft ein Kraftfahrzeug mit Unterboden und in Radhäusern angeordneten Rädern, gemäß dem Oberbegriff des Patentanspruches 1.

Ein derartiges Fahrzeug ist aus der DE 37 12 048 A1 bekannt. Die Radspoiler bestehen dort im wesentlichen aus zwei senkrecht stehenden, am Unterboden angeordneten Tragflügelprofilen mit einem sich annähernd in Fahrzeuglängsrichtung erstreckenden Profilquerschnitt.

Eine aus der US 5,511,847 A bekannte Luftleiteinrichtung umfasst in Fahrtrichtung vor den Vorderrädern angeordnete Abschnitte, die die anströmende Luft nach unten ablenken. Zur Fahrzeugmitte hin schließt sich jeweils ein Abschnitt an, der die anströmende Luft den Bremsen zuführt.

Durch die DE 33 47 364 A1 ist es bekannt, bei Kraftfahrzeugen, insbesondere Personenkraftwagen, im Bereich vor den Rädern am Unterboden Radspoiler anzuordnen, die die Umströmung der an sich aerodynamisch ungünstigen Räder verbessern. Zudem sind die Unterböden, z.B. im Frontbereich des Kraftfahrzeuges und beginnend an der Bugschürze, zur Erzielung einer möglichst laminaren Umströmung relativ glattflächig und ggf. keilförmig nach vorne ansteigend gestaltet. Der Unterboden endet dabei im Bereich der Räder an haubenartig über diesen angeordneten Radhäusern. Insbesondere Personenkraftwagen weisen ferner leistungsfähige Scheibenbremsen auf, die gegen Umwelteinflüsse relativ gut geschützt in den Radschüsseln der Räder positioniert sind.

Aufgabe der Erfindung ist es, mit relativ geringem Mehraufwand Funktionsteile der Räder und ggf. der Radaufhängungen noch wirkungsvoller vor Umwelteinflüssen zu schützen.

Diese Aufgabe wird erfindungsgemäß mit den kennzeichnenden Merkmalen des Patentanspruches 1 gelöst. Vorteilhafte und zweckmäßige Weiterbildungen der Erfindung sind den weiteren Patentansprüchen entnehmbar.

Erfindungsgemäß wird vorgeschlagen, die Radspoiler zumindest einer Radachse, z.B. der Vorderräder, in einer im wesentlichen senkrecht nach unten ragenden Abweisleiste enden zu lassen, wobei diese Abweisleisten durchgehend nach innen und hinten zumindest bis etwa zur senkrechten, durch die Raddrehachsen verlaufenden Radmittenebene der Räder verlängert sind. Durch den erfindungsgemäßen Vorschlag wird ein nicht unbeträchtlicher Anteil von am Unterboden des Kraftfahrzeuges entlangströmenden Schmutzpartikeln, Feuchtigkeit durch Regen, etc. um die Räder herumgeleitet und somit von den Radschüsseln abgelenkt. Dementsprechend werden die besagten Funktionsteile weniger beaufschlagt bzw. sind vermehrt geschützt. Dabei ist es ausreichend, wenn diese durchgehenden Abweisleisten zumindest etwa bis zu den Raddrehachsen nach hinten geführt sind; ggf. können die Abweisleisten aber auch noch weiter nach hinten gezogen sein.

Bevorzugt können die Abweisleisten entlang der Kante zwischen dem Unterboden und den Radhäusern verlaufen, wobei sie entweder einstückig mit den Radspoilern an den Unterboden angebaut oder unmittelbar durch Fortsätze des Unterbodens und/oder der Radhäuser gebildet sein können.

Die Abweisleisten können unmittelbar den Radspoiler bilden und sind entsprechend den aerodynamischen Voraussetzungen im Bereich vor den Rädern breiter als in den nur der Abweisung von Umwelteinflüssen dienenden Bereichen, die ggf. nur eine Breite von bis zu 20 mm aufweisen können.

Ein Ausführungsbeispiel der Erfindung ist im folgenden mit weiteren Einzelheiten näher erläutert. Die schematische Zeichnung zeigt in
- Figur 1: den Frontbereich eines Personenkraftwagens in einer Seitenansicht;
- Figur 2: eine Ansicht der Bugschürze und des Unterbodens mit Radspoiler und Abweisleiste am linken Vorderrad des Personenkraftwagens, in der Ansicht X gemäß Figur 1; und
- Figur 3: eine Draufsicht von unten auf die Bugschürze, den Unterboden und das Radhaus ebenfalls des linken Vorderrades des Personenkraft-wagens gemäß den Figuren 1 und 2.

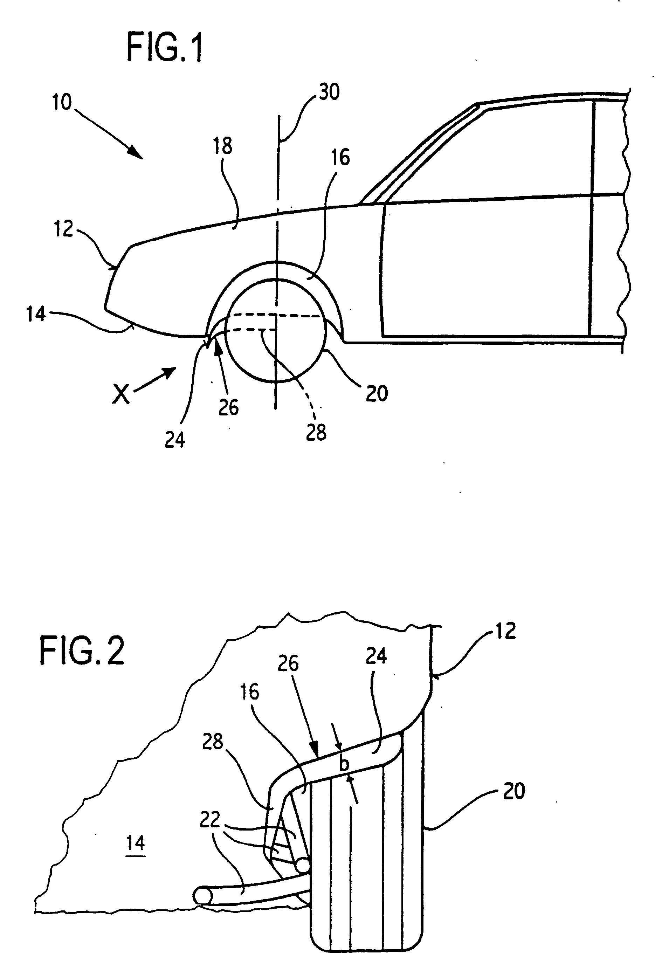

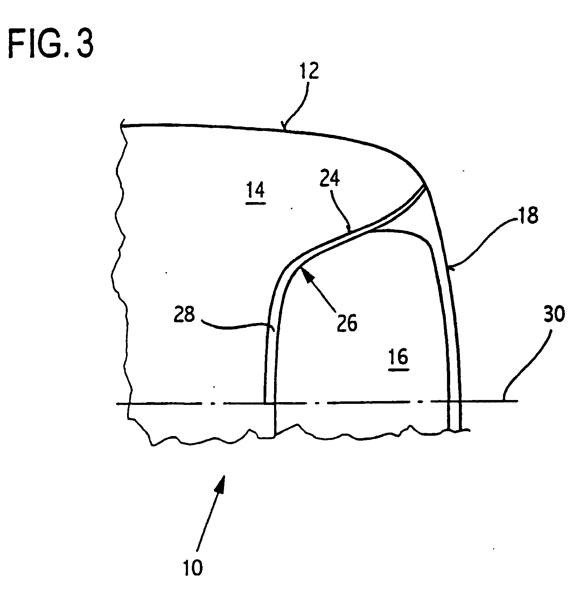

In der Figur 1 ist schematisch der Frontbereich eines Kraftfahrzeuges bzw. eines Personenkraftwagens 10 bekannter Bauart dargestellt, mit einer Bugschürze 12, einem leicht keilförmig verlaufenden Unterboden 14, der z.B. linksseitig (die rechte Seite ist sich spiegelbildlich gleich vorzustellen) durch ein linkes Radhaus 16 begrenzt wird (vergleiche auch Figur 3). Das Radhaus 16 ist nach außen durch den Kotflügel 18 abgedeckt.

In den Radhäusern 16 sind die Vorderräder 20 des Personenkraftwagens 10 angeordnet, die über bekannte und daher nicht näher beschriebene Radführungsteile 22 (vergleiche Figur 2) drehbar und lenkbar aufgehängt sind.

In den nach innen offenen Radschüsseln der Vorderräder 20 sind dabei in bekannter Weise Radführungsgelenke, Radlager, ggf. Antriebsgelenkmanschetten, Scheibenbremsen, etc. angeordnet (nicht dargestellt).

An der zwischen den Radhäusern 16 und dem Unterboden 14 bzw. der Bugschürze 12 verlaufenden Kante ist im Bereich vor den Rädern 20 ein senkrecht nach unten abragender Radspoiler 24 angeordnet, der sich in Form einer insgesamt mit 26 bezeichneten Abweisleiste durchgehend nach innen und hinten um das Radhaus 16 herum bis etwa zur senkrechten Radmittenebene 30 der Räder 20 erstreckt.

Der etwa seitlich zu den Rädern 20 liegende Abschnitt 28 der Abweisleiste 26 weist eine geringere Breite b auf und dient insbesondere der Abführung von am Unterboden 14 z.B. bei starkem Regen entlangströmendem Wasser, das somit von der Luftströmung entlang den Abweisleisten 28 an den nach innen offenen Radschüsseln der Räder 20 vorbeigeführt wird. Der Radspoiler 24 der Abweisleiste 26 hingegen ist nach aerodynamischen Gesichtspunkten ausgelegt, dient aber ebenso der Abweisung von Umwelteinflüssen, so dass es - wie aus der Figur 3 ersichtlich - günstig ist, wenn dieser Abschnitt 28 nicht quer zur Anströmrichtung, sondern schräg nach innen konfiguriert ist.

Die Abweisleisten 26 können als separate Bauteile hergestellt und am Unterboden befestigt sein, z.B. mittels Schraubverbindungen. Die Abweisleisten 26 können jedoch auch unmittelbar durch entsprechende Fortsätze an den Unterboden 14 und/oder an die Radhäuser 16 angeformt sein. Die Abweisleisten 26 können ferner im Bereich des Radspoilers 24 aerodynamisch günstig mit einem abgerundeten Übergang vom Unterboden 14 in die Abrisskante des Radspoilers 24 ausgeführt sein, während der Abschnitt 28 bevorzugt winkelförmig abgekantet ist, um eine wirkungsvolle Abweisungsfunktion zu erreichen. Ggf. könnte der Bereich 28 auch ähnlich einer Fangleiste, z.B. im Querschnitt U-förmig, gestaltet sein.

Die beschriebene Vorrichtung kann alternativ oder zusätzlich auch an den Hinterrädern im Heckbereich des Kraftfahrzeuges 10 vorgesehen sein.

## Patentansprüche

1. Kraftfahrzeug (10) mit Unterboden (14) und in Radhäusern (16) angeordneten Rädern (20), die an am Aufbau des Kraftfahrzeuges (10) angelenkten Radführungselementen (22) geführt sind, wobei im Bereich der nach innen offenen Radschüsseln Funktionsteile angeordnet sind, sowie mit in Fahrtrichtung vor den Rädern (20) am Unterboden (14) angeordneten Radspoilern (24), **dadurch gekennzeichnet, dass** die Radspoiler (24) zumindest einer Radachse je Rad (20) in einer im wesentlichen senkrecht nach unten ragenden Abweisleiste (26) enden, wobei die Abweisleisten (26) durchgehend nach innen und hinten zumindest bis etwa zur senkrechten, durch die Raddrehachse verlaufenden Radmittenebene (30) der Räder (20) verlängert sind.

2. Kraftfahrzeug nach Anspruch 1, **dadurch gekennzeichnet, dass** die Abweisleisten (26) entlang der Kante zwischen dem Unterboden (14) und den Radhäusern (16) verlaufen.

3. Kraftfahrzeug nach Anspruch 1 oder 2, **dadurch gekennzeichnet, dass** die Radspoiler (24) und die Abweisleisten (28) jeweils ein integrales Bauteil (26) bilden, welches am Unterboden (14) angebaut ist.

4. Kraftfahrzeug nach einem der Ansprüche 1 bis 3, **dadurch gekennzeichnet, dass** die Abweisleisten (26) im Bereich vor den Rädern (20) als Radspoiler (24) mit größerer Breite b und innenliegend der Räder (20) als Abweisleisten (28) mit einer geringeren Breite b ausgeführt sind.

5. Kraftfahrzeug nach einem der vorhergehenden Ansprüche, **dadurch gekennzeichnet, dass** die Radspoiler (24) und/oder die Abweisleisten (28) zumindest teilweise in den Unterboden (14) des Kraftfahrzeuges eingeformt sind.

6. Kraftfahrzeug nach einem der vorhergehenden Ansprüche, **dadurch gekennzeichnet, dass** die Radspoiler (24) und/oder die Abweisleisten (28) an Fortsätzen des Unterbodens (14) und/oder der benachbarten Radhäuser (16) ausgebildet sind.

## Claims

1. Motor vehicle (10) with an under body (14) and wheels (20) arranged in wheel housings (16), which wheels are guided on wheel guiding elements (22) articulated to the structure of the motor vehicle (10), wherein functional parts are arranged in the region of the inwardly opening wheel dishes, and with wheel spoilers (24) arranged in the direction of travel in front of the wheels (20) on the under body (14), **characterised in that** the wheel spoilers (24) of at least one wheel axle per wheel (20) terminate in a deflector plate (26) projecting essentially vertically downwards, wherein the deflector plates (26) are all extended inwards and to the rear, at least roughly as far as the vertical central wheel plane (30) of the wheels (20) running through the axis of rotation of the wheels.

2. Motor vehicle according to Claim 1, **characterised in that** the deflector plates (26) run along the edge between the under body (14) and the wheel housings (16).

3. Motor vehicle according to Claim 1 or 2, **characterised in that** the wheel spoilers (24) and the deflector plates (28) each form an integral component (26) which is added to the under body (14).

4. Motor vehicle according to one of Claims 1 to 3, **characterised in that** the deflector plates (26) are constructed in the region in front of the wheels (20) as wheel spoilers (24) with a greater width b, inside the wheels (20), than deflector plates (28) with a smaller width b.

5. Motor vehicle according to one of the preceding claims, **characterised in that** the wheel spoilers (24) and/or the deflector plats (28) are at least partially incorporated in the under body (14) of the motor vehicle.

6. Motor vehicle according to one of the preceding claims, **characterised in that** the wheel spoilers (24) and/or the deflector plates (28) are formed on extensions of the under body (14) and/or of the adjacent wheel housings (16).

## Revendications

1. Véhicule automobile (10), comprenant un dessous de caisse (14) et des roues (20) disposées dans des passages de roue (16), les roues étant guidées par des éléments de guidage de roue (22) articulés sur la carrosserie du véhicule automobile (10), dans lequel des pièces fonctionnelles sont disposées au niveau des disques de roue ouverts vers l'intérieur, ainsi que des déflecteurs de roue (24) disposés sur le dessous de caisse (14) devant les roues (20) dans le sens de la marche, **caractérisé en ce que** les déflecteurs de roue (24) d'au moins un essieu par roue (20) se terminent par une bavette (26) dépassant substantiellement verticalement vers le bas, les bavettes (26) se prolongeant en continu vers l'intérieur et l'arrière, au moins environ jusqu'au plan central de roue (30) vertical, s'étendant à travers l'axe de rotation de roue, des roues (20).

2. Véhicule automobile selon la revendication 1, **caractérisé en ce que** les bavettes (26) s'étendent le long du bord entre le dessous de caisse (14) et les passages de roue (16).

3. Véhicule automobile selon la revendication 1 ou 2, **caractérisé en ce que** les déflecteurs de roue (24) et les bavettes (28) forment respectivement un élément constitutif intégral (26) qui est monté sur le dessous de caisse (14).

4. Véhicule automobile selon l'une quelconque des revendications 1 à 3, **caractérisé en ce que** les bavettes (26) sont réalisées dans la zone devant les roues (20) comme des déflecteurs de roue (24) avec une largeur b supérieure et lorsqu'elles sont situées à l'intérieur des roues (20) comme des bavettes (28) avec une largeur b inférieure.

5. Véhicule automobile selon l'une quelconque des revendications précédentes, **caractérisé en ce que** les déflecteurs de roue (24) et/ou les bavettes (28) sont moulé(e)s au moins en partie dans le dessous de caisse (14) du véhicule automobile.

6. Véhicule automobile selon l'une quelconque des revendications précédentes, **caractérisé en ce que** les déflecteurs de roue (24) et/ou les bavettes (28) sont réalisé(e)s sur des prolongements du dessous de caisse (14) et/ou des passages de roue (16) adjacents.
